# EUROPEAN PATENT APPLICATION

(11) **EP 3 208 739 A1**
(43) Date of publication of application: **23.08.2017**
(21) Application number: 16156633.6
(22) Date of filing: 22.02.2016
(51) Int. Cl.: G06K 9/00, B60W 30/18, B60W 40/04

(54) **DRIVER ASSISTANCE SYSTEM AND METHOD FOR A MOTOR VEHICLE**

(71) Applicant: Autoliv Development AB, 447 83 Vårgårda (SE)
(72) Inventor: WEBER, Kai, 71069 Sindelfingen (DE)
(74) Representative: Müller Verweyen

(57) **Abstract**

A driver assistance system (10) for a motor vehicle (30) comprises an imaging apparatus (11) adapted to capture images of the road on which the vehicle (30) is moving, and an image processing device (16) adapted to detect by image processing lane markings (40, 41) in the images captured by said imaging apparatus (11). The image processing device (16) is adapted to compare lane marking (41) data from the left side of the ego vehicle (30) with lane marking (40) data from the right side of the ego vehicle (30), wherein said lane marking data is provided by said image processing device (16), and to evaluate whether the traffic direction is right-hand or left-hand from said comparison.

## Description

The invention relates to a driver assistance system for a motor vehicle, comprising an imaging apparatus adapted to capture images of the road on which the vehicle is moving, and a processing device adapted to detect lane markings in the images captured by said imaging apparatus by image processing. The invention also relates to a corresponding driver assistance method.

Such a system is known for example from EP 2 293 223 A1.

Also known are adaptive cruise control (ACC) systems comprising a ranging device, in particular a radar or lidar device, adapted to measure the distance and the speed of a motor vehicle in front of the ego vehicle. When the set speed of the ACC system is lower than the speed of the vehicle in front, it may be desirable to overtake the vehicle in front. In this case, the ACC system, when it leaves track of the vehicle in front, will boost the ego vehicle in order to reach the set speed.

Accelerating the ego vehicle is intended during overtaking a slower vehicle, however unintended for example in case of changing to a slower lane, or taking an exit on a highway. From the side on which a slower vehicle in front is to be passed, and knowledge about the current traffic direction (right hand traffic or left hand traffic), it can be deduced whether an accelerating boost is intended or not. However, in some cases the ego vehicle does not possess information whether it moves in right hand traffic or left hand traffic. In such cases the ego vehicle cannot reliably decide whether an accelerating boost is intended or not when leaving track of a slower vehicle in front.

The problem underlying the present invention is to improve the functionality of a driver assistance system depending on information whether it moves in right hand traffic or left hand traffic.

The invention solves this problem with the features of the independent claims. The invention has found out that the traffic direction in which the vehicle moves can automatically be determined from image processing of images captured by the imaging apparatus, namely by comparing lane marking data from the left side of the ego vehicle with lane marking data from the right side of the ego vehicle, where the lane marking data are provided by the image processing device. Statistically more broke lane markings are visible on the left side in right-hand traffic under normal conditions, taking into account that most people are driving more often in the slow lane than in the fast lane.

Preferably the image processing device is adapted to detect broken lane markings and non-broken lane markings on the left and right side of the ego vehicle. A preferred way of doing this is to compare the overall time in which a lane marking is detected to the left of the ego vehicle is compared with the overall time in which a lane marking is detected to the right of the ego vehicle. Right-hand traffic is then advantageously determined if the overall time in which a lane marking is detected to the left of the ego vehicle is less than the overall time in which a lane marking is detected to the right of the ego vehicle, and left-hand traffic is advantageously determined if the overall time in which a lane marking is detected to the left of the ego vehicle is larger than the overall time in which a lane marking is detected to the right of the ego vehicle.

Preferably a driver assistance device is controlled to perform a driver assistance operation depending on the result of the lane markings evaluation. An advantageous application of the invention relates to an adaptive cruise control (ACC) system. The driver assistance operation, in the case of an ACC system for example a vehicle boost, can advantageously be performed depending on the speed of a motor vehicle in front as measured by a ranging device, in particular when the speed of a preceding motor vehicle is lower than a set speed of the ACC system. Also preferably, the driver assistance operation is performed depending on the setting of the turn indicator, in particular if the setting of the turn indicator indicates that the driver is intending to overtake the vehicle in front.

In a preferred embodiment of the invention, the image processing device comprises at least one timer that counts the time in which a line is detected to the left of the ego vehicle and the time in which a line is detected to the right of the ego vehicle. For example, the image processing device may comprises one timer which starts with a predetermined initial value and counts up as long as a line is detected to the left of the ego vehicle, and counts down as long as a line is detected to the right of the ego vehicle, not counting when either a line is detected on both sides or no line is detected at either side. This corresponds to detecting broken lane markings and non-broken lane markings, since the timer counts for a longer time in case of non-broken lane markings in comparison to broken lane markings. When the timer or counter exceeds a predetermined threshold, or is higher than the initial value after a predetermined time, the overall time in which a line is detected is higher to the left. Therefore, it is estimated that a closed line is on the left and a broke line is on the right, and left-hand traffic is determined. When the timer or counter falls below a predetermined threshold, or is lower than the initial value after a predetermined time, the overall time in which a line is detected is higher to the right. Therefore, it is estimated that a closed line is on the right and a broke line is on the left, and right-hand traffic is determined.

Instead of one timer counting in both directions as described above, the invention could also be realized by two timers, one for the left side and one the right side, each counting in only one direction, i.e. up or down.

Lanes are marked differently from country to country, but it is common that non-broken or continuous markings / lines are not to be crossed, whereas broken or interrupted markings / lines can be crossed. To overcome the fact that lane markings for non-highway roads may differ from country to country, the traffic direction evaluation will preferably not become activated until highway-like conditions are determined, in particular until the vehicle speed exceeds a predetermined threshold, for example 70 km/h.

To adjust the system for drivers who prefer driving in the fast lane for a long time, the image processing device is preferably adapted to detect by image processing other vehicles moving slower than, but in the same direction as the ego vehicle in an adjacent lane (i.e., not in the ego lane), in particular in a directly adjacent lane. It is then estimated that the ego vehicle is moving in the fast lane, or more generally in a faster lane compared to the slow lane, overtaking or passing slower vehicles. The evaluation of the driving direction may then preferably be interrupted as long as such condition is fulfilled, i.e. as long as driving in the fast lane (or not in the slow lane) can be assumed. In embodiments where at least one timer is used, the timer is stopped as long as slower objects are passed, in particular on the side of the broken markings.

Preferably only lane markings of the ego lane, i.e. the lane in which the ego vehicle is moving, are processed in the traffic direction evaluation. This can be advantageous since the field of view of the imaging apparatus is so large that more than the neighboring lane markings can be detected. However, in other embodiments it could be useful to consider further than the immediate neighboring lane markings in the traffic direction evaluation.

The detection of the traffic direction with a vision system according to the invention is not restricted to adaptive cruise control systems. For example, the inventive traffic direction detection could be useful in a wrong-way driver warning system. If for example an on-board GPS system determines that the vehicle is in a country having right hand traffic, but the vision system under the invention determines that the vehicle in fact moves on a left hand traffic highway, such finding could indicate wrong-way driving, and corresponding driver warning measures could be taken.

In the following the invention shall be illustrated on the basis of preferred embodiments with reference to the accompanying drawings, wherein:

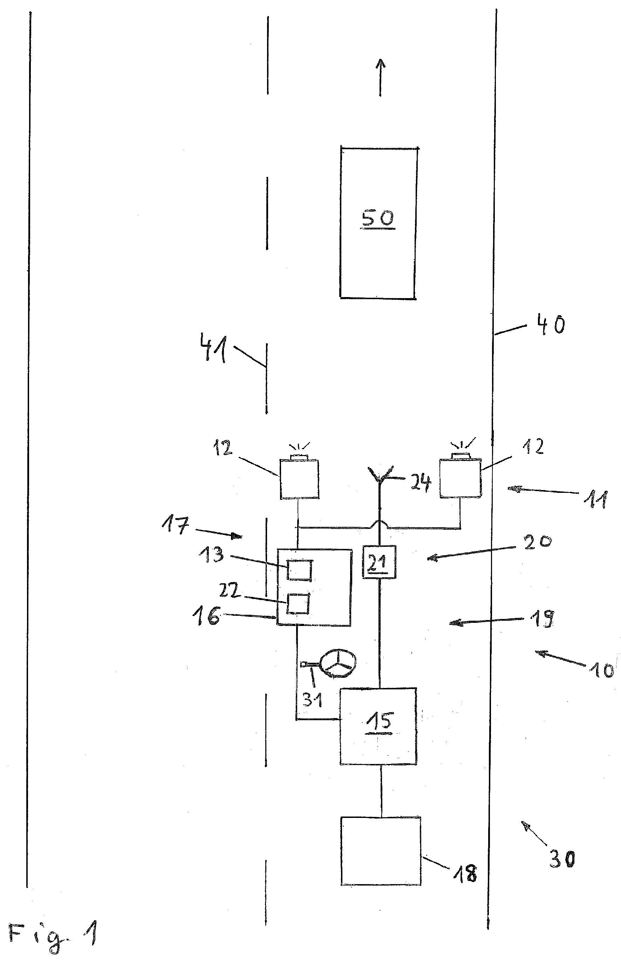

- Fig. 1: shows a schematic illustration of a vehicle comprising a driver assistance system 10 with a vision system 17 and an adaptive cruise control system 19.

The driver assistance system 10 is mounted in a motor vehicle and comprises an imaging apparatus 11 for acquiring images of a region surrounding the motor vehicle, for example a region in front of the motor vehicle. Preferably the imaging apparatus 11 comprises one or more optical imaging devices 12, in particular cameras, operating in the visible and/or infrared wavelength range, where infrared covers near IR with wavelengths below 5 microns and/or far IR with wavelengths beyond 5 microns. In some embodiments the imaging apparatus 11 comprises a plurality imaging devices 12 in particular forming a stereo imaging apparatus 11. In other embodiments only one imaging device 12 forming a mono imaging apparatus 11 can be used.

The imaging apparatus 11 is coupled to an image processing device 16 adapted to process the image data received from the imaging apparatus 11. The image processing device 16 may comprise a pre-processing section 13 adapted to control the capture of images by the imaging apparatus 11, receive the electrical signal containing the image information from the imaging apparatus 11, rectify or warp pairs of left/right images into alignment and/or create disparity or depth images, which per se is known in the art. The image pre-processing section 13 may be realized by a dedicated hardware circuit, for example a Field Programmable Gate Array (FPGA). Alternatively the pre-processing section 13, or part of its functions, can be realized by software in a microprocessor or a System-On-Chip (SoC) device comprising, for example, FPGA, DSP, ARM and/or microprocessor functionality. In the case of a vision system 10 using only one camera 12 the pre-processing section 13 may not be needed.

The image processing device 16 is adapted to carry out further image and data processing, which will be explained later. The imaging apparatus 11 and the image processing device 16 together form a vision system 17.

In addition to the vision system 17, the driver assistance system 10 also comprises an adaptive cruise control (ACC) system 19 having a ranging device 20 which is adapted to measure the distance to another vehicle 50 moving in front of the ego vehicle. The ranging device 20 comprises an emitter/receiver 21, here with an antenna 24 adapted to generate and emit radio waves and to receive radio waves reflected by a vehicle 50 in front of the ego vehicle 30, and an ACC control device 15 adapted to process the data received from the emitter/receiver 21 and to send information to the engine control unit 18 enabling it to perform adaptive cruise control through engine control.

Common ranging devices 20 are based on radar using radio waves, or lidar using one or more laser beams. In the following a radar ranging device 20 is considered. In radar embodiments, the radio emitter/receiver 21 is adapted to emit and receive radar waves via one or more radar antennas 24. It is also possible to have separate emitter device and receiver device and/or separate emitter antenna and receiver antenna.

The ACC system 19 provides the known function of keeping an essentially constant distance to a vehicle 50 in front of the ego vehicle 30 if the set speed of the ACC system 19 is lower than the actual speed of the preceding vehicle 50, and the ego vehicle 30 has approached the preceding vehicle 50 to below a pre-determined distance.

If the driver wants to overtake the preceding vehicle 50, he sets the turn indicator 31 accordingly and steers the vehicle 30 in the corresponding direction. In the following right hand traffic is assumed. In such a case, the driver pulls down the turn indicator 31 and steers the vehicle 30 to the left in the direction of the fast lane. When the ego vehicle 30 leaves track of the preceding vehicle 50, i.e. when the tracking device 20 estimates that the preceding vehicle 50 is no longer blocking the path of the ego vehicle 30, the ACC system 19 would normally boost the speed of the ego vehicle 30 by sending a corresponding signal to the engine control u5it 18, in order to reach the set speed of the ACC system 19. However, this is only desirable if the vehicle 30 indeed moves in right hand traffic.

According to the invention, the vision system 17 is adapted to determine whether the ego vehicle 30 moves in right hand traffic or in left hand traffic. More specifically, the image processing device 16 is adapted to determine lane markings 40, 41 on the road on which the vehicle 30 is moving, namely lane markings 40 delimiting the ego lane to the right, and lane markings 41 delimiting the ego lane to the left. Image processing techniques for detecting lane markings 40, 41 are known in the art.

In order to determine whether the vehicle 30 moves in right hand traffic or in left hand traffic, the image processing device 16 preferably comprises a timer 22 which counts up (or down) in case a lane marking 40 is visible at the right side of the ego lane but not on the left side, and counts down (or up) as long as a lane marking 41 is visible at the left side of the ego lane but not on the right side.

The counting of the timer 22 started for example in case a non-broken lane marking 40 is detected, and/or in case a broken lane marking 41 is detected, and is maintained over an evaluation period. The evaluation period may be a predetermined period of time, for example 60 s. Alternatively, the evaluation may be carried out until a predetermined difference between the contents of the first and second timers 22, 23 is reached.

When the evaluation period has ended, the content of the timer is considered. When the overall or integrated visibility time of lane markings 40 on the right side is significantly higher than the overall or integrated visibility time of lane markings 41 on the left side, i.e. in the above example if the content of timer 22 is higher than at the beginning of the evaluation period, right hand traffic is estimated. In the opposite case, i.e. if the content of timer 22 is significantly lower than at the beginning of the evaluation period, left hand traffic is estimated. A corresponding traffic direction information is sent from the image processing device 16 to the ACC control device.

If right hand traffic has been estimated and the ego vehicle 30 turns left for changing lanes, the ACC control device initiates a vehicle boost since the vehicle 30 is estimated to change to a faster lane, intending to overtake the slower vehicle 50. If instead left hand traffic has been estimated and the ego vehicle 30 turns left for changing lanes, the ACC control device 15 inhibits the vehicle boost since the vehicle 30 0 is estimated to change to a slower lane, or to take an exit for example on a highway.

The image processing device 16 may be adapted to perform other driver assistance functions, by identifying and preferably also classifying other possible objects in front of the motor vehicle, such as pedestrians, other vehicles, bicyclists and/or large animals, tracking over time the position of object candidates identified in the captured images, and may activate or control at least one driver assistance device depending on an estimation performed with respect to a tracked object, for example an estimated collision probability. The driver assistance device may comprise a display device to display information relating to a detected object; a warning device adapted to provide a collision warning to the driver by suitable optical, acoustical and/or haptic warning signals; one or more restraint systems such as occupant airbags or safety belt tensioners, pedestrian airbags, hood lifters and the like; and/or dynamic vehicle control systems such as brake or steering control devices.

The image processing device 16 and/or the ACC control unit 15 are preferably digital devices which are programmed or programmable and preferably comprise at least one microprocessor, micro-controller, digital signal processor (DSP) and/or System-On-Chip (SoC) device. The image processing section 16 is preferably realised in an on-board electronic control unit (ECU). Also the receiver/emitter 21 and/or the ACC control unit 15 is/are preferably realised in an on-board electronic control unit (ECU), which may be the same as the vision system ECU. In other embodiments the ECU or ECUs and one or more of the imaging devices 12 and/or the radar antenna or antennas 24 can be integrated into a single unit. All steps from imaging, image pre-processing, image processing and adaptive cruise control are performed automatically and continuously during driving in real time.

## Claims

1. A driver assistance system (10) for a motor vehicle (30), comprising an imaging apparatus (11) adapted to capture images of the road on which the vehicle (30) is moving, and an image processing device (16) adapted to detect by image processing lane markings (40, 41) in the images captured by said imaging apparatus (11), **characterized in that** said image processing device (16) is adapted to compare lane marking (41) data from the left side of the ego vehicle (30) with lane marking (40) data from the right side of the ego vehicle (30), and to evaluate whether the traffic direction is right-hand or left-hand from said comparison.

2. The driver assistance system as claimed in claim 1, **characterized in that** said comparison comprises comparing the overall time in which a lane marking (41) is detected to the left of the ego vehicle (30) with the overall time in which a lane marking (40) is detected to the right of the ego vehicle (30).

3. The driver assistance system as claimed in claim 2, **characterized in that** right-hand traffic is determined if the overall time in which a lane marking (41) is detected to the left of the ego vehicle (30) is less than the overall time in which a lane marking (40) is detected to the right of the ego vehicle (30).

4. The driver assistance system as claimed in claims 2 or 3, **characterized in that** line marking (40, 41) data are accumulated until the absolute difference between the overall time in which a lane marking (41) is detected to the left of the ego vehicle (30) and the overall time in which a lane marking (40) is detected to the right of the ego vehicle (30) exceeds a predetermined threshold.

5. The driver assistance system as claimed in claims 2 or 3, **characterized in that** line marking (40, 41) data are accumulated for a predetermined period of time.

6. The driver assistance system as claimed in any one of the preceding claims, **characterized in that** said image processing device (16) is adapted to detect by image processing other vehicles moving slower than, but in the same direction as, the ego vehicle (30).

7. The driver assistance system as claimed in claim 6, **characterized in that** line marking (40, 41) data are discarded during times in which other vehicles moving slower than, but in the same direction as, the ego vehicle (30) are detected in a neighboring lane.

8. The driver assistance system as claimed in any one of the preceding claims, **characterized in that** said image processing device (16) is adapted to restrict said evaluation to the lane markings (40, 41) of the lane the ego vehicle (30) is moving in.

9. The driver assistance system as claimed in any one of the preceding claims, **characterized in that** the traffic direction evaluation is not activated until highway-like conditions are determined, in particular until the vehicle speed exceeds a predetermined threshold.

10. The driver assistance system as claimed in any one of the preceding claims, **characterized in that** said driver assistance system (10) is adapted to control a driver assistance device (18) to perform a driver assistance operation depending on the result of the lane markings (40, 41) evaluation.

11. The driver assistance system as claimed in claim 10, **characterized in that** said driver assistance operation is performed depending on the speed of a motor vehicle (50) in front as measured by a ranging device (20).

12. The driver assistance system as claimed in claim 11, **characterized in that** said driver assistance operation is performed when the speed of a motor vehicle (50) in front is lower than a set speed.

13. The driver assistance system as claimed in any one of the preceding claims 10 to 12, **characterized in that** said driver assistance operation is performed depending on the setting of a vehicle turn indicator (31), in particular if the setting of the vehicle turn indicator (31) indicates that the driver is intending to overtake the vehicle (50) in front.

14. The driver assistance system as claimed in any one of the preceding claims, **characterized in that** a vehicle (30) acceleration boost is performed depending on the result of the lane markings (40, 41) evaluation.

15. A driver assistance method for a motor vehicle, comprising capturing images of the road on which the vehicle is moving, and detecting lane markings in the captured images by image processing, **characterized by** comparing lane marking (41) data from the left side of the ego vehicle (30) with lane marking (40) data from the right side of the ego vehicle (30), and evaluating whether the traffic direction is right-hand or left-hand from said comparison.
